# FASCICULE DE BREVET EUROPEEN

(11) **EP 1 221 000 B1**
(45) Date de publication et mention de la délivrance du brevet: **09.02.2005**
(21) Numéro de dépôt: 99910421.9
(22) Date de dépôt: 24.03.1999
(51) Int. Cl.: F16H 7/12

(54) **DISPOSITIF DE TENSION DANS LES TRANSMISSIONS DE MOUVEMENTS DE ROTATION PAR COURROIES, CHAINES OU CABLES**
SPANNVORRICHTUNG IN RIEMEN-, KETTEN ODER SEILGETRIEBEN ZUR ÜBERTRAGUNG DER ROTATIONSBEWEGUNG
TENSIONING DEVICE IN ROTATING MOVEMENT TRANSMISSION BY BELTS, CHAINS OR CABLES

(43) Date de publication de la demande: 10.07.2002
(73) Titulaire: Hascoat, Joel Jean Lucien, 93600 Aulnay Sous Bois (FR)
(72) Inventeur: Hascoat, Joel Jean Lucien, 93600 Aulnay Sous Bois (FR)
(74) Mandataire: de Saint-Palais, Arnaud Marie
(86) Numéro de dépôt international: PCT/FR1999/000683
(87) Numéro de publication internationale: WO 2000/057085

(56) Documents cités:
- FR-A- 2 634 263
- FR-A- 2 665 498
- FR-A- 2 768 793
- US-A- 3 358 521

## Description

Dispositif de tension dans les transmissions de mouvements de rotation par courroies, chaînes ou câbles.

La présente invention concerne un dispositif de tension et d'immobilisation d'un galet tendeur de transmission de mouvements de rotation. Ces transmissions peuvent être réalisées par courroies plates, dentées synchrones, trapézoïdales, rondes ou striées; par chaîne simple ou multiple ; par câble ou similaire. Le dispositif selon l'invention est un galet à pivot interne excentré fixé sur une surface d'appui appartenant par exemple au support de la transmission.

On connaît déjà, notamment dans les brevets français N° 2 665 498 et N° 2 634 263 un dispositif d'immobilisation de galet tendeur de courroie, permettant la fixation du moyeu d'un galet formant excentrique, dans une position angulaire déterminée par rapport à une surface d'appui, telle que l'une de celles appartenant à un carter, à une culasse, etc. ...

Le document FR-A-2 634 263 (voir figure 1) divulgue les caractéristiques suivantes présentes dans les revendications 1 et 10 (partiellement):
dispositif de tension et d'immobilisation d'un galet tendeur de transmission de mouvements de rotation par courroie permettant le réglage et la fixation du moyeu 8 d'un galet tendeur 2 formant excentrique, dans une position déterminée, sur une surface d'appui appartenant au support de transmission, au moyen d'une vis de serrage 9 traversant le moyeu 8, où un axe fixe de pivotement 9 solidaire du support de la transmission est prévu, cet axe fixe de pivotement 9 étant constitué d'une partie cylindrique constituant le guidage en rotation du moyeu 8, entre deux faces dont l'une repose sur la surface d'appui et dont l'autre est formée par le dessous d'une tête cylindrique 10 qui s'étend radialement au-delà de la partie cylindrique, l'entr'axe obtenu par le décalage latéral permettant, par la rotation du moyeu 8 autour de l'axe fixe 9 de pivotement lorsque la vis de serrage 9 n'est pas encore serrée, de faire parcourir au moyeu une course circulaire qui constitue la course de tension du dispositif.

Cette fixation du moyeu est réalisée au moyen d'une vis traversant le moyeu parallèlement à son axe de rotation pour se visser dans la surface d'appui. Dans ce type de dispositif, la tige de la vis précitée présente sur une partie de sa longueur une surface lisse formant axe de rotation du moyeu du galet. Ce moyeu est entraînable en rotation au moyen d'un outil approprié qui s'engage dans un orifice prévu sur la surface du galet opposée à celle destinée à être en contact avec la surface d'appui. Une garniture destinée à recevoir la courroie est montée sur roulement à billes, de manière librement tournante autour du moyeu. L'intérêt de ce dispositif réside principalement dans son encombrement minimal, tenant au fait que le mécanisme de tension est interne au galet.

La mise en service du galet consiste à entraîner, en rotation, le moyeu du galet autour de la tige de la vis jusqu'à ce qu'il prenne une position angulaire déterminée en fonction de la valeur de la tension de courroie choisie, puis, dans un deuxième temps, à fixer le moyeu dans cette position en vissant la vis de serrage.

Ce dispositif, peu encombrant, présente cependant trois inconvénients :
- la course de réglage est faible, car liée à la valeur de l'excentration, elle-même limitée par le passage de la vis de fixation, dans le diamètre intérieur du roulement à billes.
- L'effort de tension de la transmission n'est applicable qu'à l'aide d'une clé spécifique, placée dans des encoches de la face supérieure du moyeu. Le dispositif, entièrement cylindrique, ne permet pas d'utiliser les clés standard du commerce.
- la mesure de l'effort de tension n'est réalisable qu'indirectement, à l'arrêt, de trois façons :
   1) par la mesure de l'allongement de la courroie après tension,
   2) par la mesure de la course de déflexion de la courroie après tension,
   3) par la mesure de la fréquence de vibration de la courroie après tension à l'aide d'un appareil spécifique.

Ces méthodes de mesure de la valeur de l'effort de tension sont peu précises et difficiles à mettre en oeuvre ; elles font appel à des moyens particuliers, ne constituant pas l'outillage habituel d'un atelier de montage ou d'entretien, elles nécessitent plusieurs réglages et mesures successifs, elles ne constituent pas des mesures directes et, de ce fait, sont imprécises, ces méthodes de mesure ne permettent pas de transmettre un couple dans des conditions optimales de durée de vie, de qualité d'entraînement, de niveau sonore. L'effort de tension doit être déterminé et appliqué avec précision.

Le dispositif, selon l'invention, permet de remédier à ces inconvénients. En effet, il se compose d'un galet tendeur, à pivot excentré selon la revendication 1 ou 10. Il est très peu encombrant, ses composants restant toujours contenus dans le diamètre extérieur du galet. Sa fixation est assurée sur le support de transmission, par une vis largement dimensionnée. Son embrase de grand diamètre lui confère une bonne rigidité. Sa course de tension est suffisante pour satisfaire la plupart des applications. La course et l'effort de tension sont exercés à l'aide d'outils de serrage standard du commerce sur un bras d'entraînement inférieur ou un bras d'entraînement supérieur solidaires du moyeu, le choix de l'un ou de l'autre est fonction des contraintes d'encombrement et d'accessibilité. L'effort de tension exercé par le galet sur la transmission peut être exercé et mesuré simultanément directement, à l'aide d'une clé dynamométrique. Le dispositif peut être mis en place, réglé et serré en position par le dessus du support de transmission. Ce dispositif, à titre d'exemple non limitatifs, peut être réalisé du diamètre 20 mm environ et au delà du diamètre de 300 mm, permettant d'étendre son domaine d'application, des matériels de bureautique aux machines industrielles.

Le dispositif, selon l'invention, se compose en effet d'un galet extérieur, de forme adaptée à chaque type de transmission pouvant constituer une poulie pour courroie, plate, dentée synchrone, trapézoïdale, ronde ou striée ; un pignon pour chaîne simple ou multiple; une poulie pour câble. Ce galet reçoit une ou plusieurs garnitures de guidage en rotation, lesquelles sont solidaires d'un moyeu qui comporte, selon une première caractéristique, une vis de serrage traversant le moyeu qui agit sur une pièce intermédiaire placée librement dans un logement du moyeu, cette pièce intermédiaire permettant de créer un décalage latéral entre l'axe de là vis de serrage et un axe fixe de pivotement solidaire du support de la transmission, l'entr'axe obtenu par le décalage latéral précité permettant, par la rotation du moyeu autour de l'axe fixe de pivotement, lorsque la vis de serrage n'est pas encore serrée, de faire parcourir au moyeu une course circulaire qui constitue la course de tension du dispositif, le serrage de la vis de serrage dans la pièce intermédiaire qui agit en moyen de bridage et prend appui, à l'une de ses extrémités comportant un talon dans le fond du logement et à l'autre extrémité sous la tête de l'axe fixe de pivotement, immobilisant par pression et adhérence, dans la position déterminée, le moyeu sur la surface d'appui.

L'axe fixe de pivotement est excentré par rapport à l'axe de rotation du galet mais reste dans l'encombrement du moyeu. La dissociation de l'axe de pivotement et de la vis de bridage permet d'obtenir une excentration maximale en maintenant l'ensemble des composants en deçà du diamètre extérieur du galet. L'indessérabilité et la stabilité de l'ensemble est assurée par l'embase du grand diamètre du moyeu. La face opposée à la surface de fixation sur le support de transmission étant souvent inaccessible par sa forme, la présence de renforts, goussets ou éléments mécaniques, l'installation et le réglage du dispositif sont réalisables sur la face d'appui du support de transmission, par le dessus du dispositif de tension.

Le dispositif peut être implanté à l'intérieur ou à l'extérieur de la transmission.

Selon une seconde caractéristique, le moyeu comporte, dans son embase, un logement recevant un bras d'entraînement inférieur, solidaire du moyeu, s'étendant au delà de l'extérieur de l'embase du moyeu permettant, à l'aide d'une clé à fourche standard du commerce ou d'une clé dynamométrique, de faire pivoter le dispositif autour de l'axe fixe de pivotement et ainsi de tendre la transmission.

L'utilisation d'une clé dynamométrique permet d'appliquer et de mesurer simultanément l'effort exercé et d'obtenir ainsi une tension déterminée et reproductible de la transmission.

Selon une troisième caractéristique, le moyeu comporte, dans sa partie supérieure, un logement recevant un bras d'entraînement supérieur solidaire du moyeu permettant, à l'aide d'une clé à fourche standard du commerce ou d'une clé dynamométrique, de faire pivoter le dispositif autour de l'axe fixe de pivotement et ainsi de tendre la transmission.

L'utilisation d'une clé dynamométrique permet d'appliquer et de mesurer simultanément l'effort exercé et d'obtenir ainsi une tension déterminée et reproductible de la transmission.

Suivant une autre caractéristique de l'invention, le bras d'entraînement inférieur et le bras d'entraînement supérieur comportent des extrémités adaptés pouvant recevoir des dispositifs complémentaires de réglage et d'immobilisation en position, du moyeu du galet, dispositifs de traction ou de poussée par éléments souples ou élastiques, dispositifs de traction ou de poussée par des actionneurs commandés à distances et des dispositifs de contrôle et de sécurité détectant les défauts de l'effort de tension ou de la position angulaire du galet tendeur.

Suivant une autre caractéristique de l'invention, la pièce intermédiaire est constituée d'une part, d'un guide coulissant dans un logement du moyeu parallèle à l'axe de rotation du galet et d'autre part, d'une collerette perpendiculaire et en prolongement du guide prenant appui sous la tête de l'axe fixe de pivotement, ce qui immobilise, par pression et adhérence dans la position déterminée, le moyeu sur la face d'appui, lors du serrage de la vis.

Suivant une autre caractéristique de l'invention, dans le cas où la fixation du dispositif est souhaitable par le dessous du support de la transmission, la pièce intermédiaire peut comporter un taraudage recevant l'axe fixe de pivotement accessible par le dessous de la surface d'appui qui comporte un orifice recevant la partie cylindrique de l'axe de pivotement, la tête dudit axe prenant appui sous le support de la transmission, le serrage de la vis de serrage assurant l'immobilisation par pression et adhérence du moyeu sur la surface d'appui.

Suivant une autre caractéristique de l'invention ; la pièce intermédiaire est prolongée au-delà de l'extérieur de l'embase du moyeu et constitue le bras d'entraînement permettant d'exercer l'effort de tension.

Suivant une autre caractéristique de l'invention, le bras d'entraînement inférieur, lorsqu'il est constitué d'une pièce spécifique, est amovible et peut être retiré de l'embase du moyeu par coulissement dans son logement, après réglage de la tension de la transmission.

Suivant une autre caractéristique de l'invention, les bras d'entraînement inférieur et supérieur, en leur extrémité, comportent une partie en saillie de forme polygonale permettant l'utilisation d'outils de serrage standard du commerce : clé à fourche, à pipe, polygonale, à molette, à douilles, clé dynamométrique.

Suivant une autre caractéristique de l'invention, la pièce intermédiaire, lorsqu'elle est prolongée au-delà de l'extérieur de l'embase du moyeu et constitue le bras d'entraînement, comporte en son extrémité une partie en saillie de forme polygonale permettant l'utilisation d'outils de serrage standard du commerce : clé à fourche, à pipe, polygonale, à molette, à douilles, clé dynamométrique.

Suivant une autre caractéristique de l'invention, le bras d'entraînement supérieur comporte un alésage recevant un axe concentrique à l'axe fixe de pivotement permettant, par un support solidaire du support de transmission, d'assurer le maintien de l'extrémité du moyeu.

Les dessins annexés, donnés uniquement à titre d'exemple, illustrent l'invention :
La figure 1 représente une vue en coupe du dispositif selon l'invention.
La figure 2 représente une vue de dessus du dispositf.
La figure 3 représente une vue en coupe selon AA de la figure 1 du Idispositif de l'invention.
La figure 4 représente une vue en coupe d'un second mode de réalisation du dispositif.
La figure 5 représente une vue de dessus de cette variante de réalisation du dispositif.
La figure 6 représente une vue en coupe d'un troisième mode de réalisation.
La figure 7 représente une vue de dessus de ce troisème mode de réalisation.
La figure 8 représente une vue en coupe d'un quatrième mode de réalisation.
La figure 9 représente vue de dessus de ce quatrième mode de réalisation.
La figure 10 représente une vue en coupe d'une autre variante de ce dispositif.

Afin de faciliter la compréhension des dessins, le galet tendeur est représenté en trait fort en position tension maxi et en trait fin en position recul maxi.

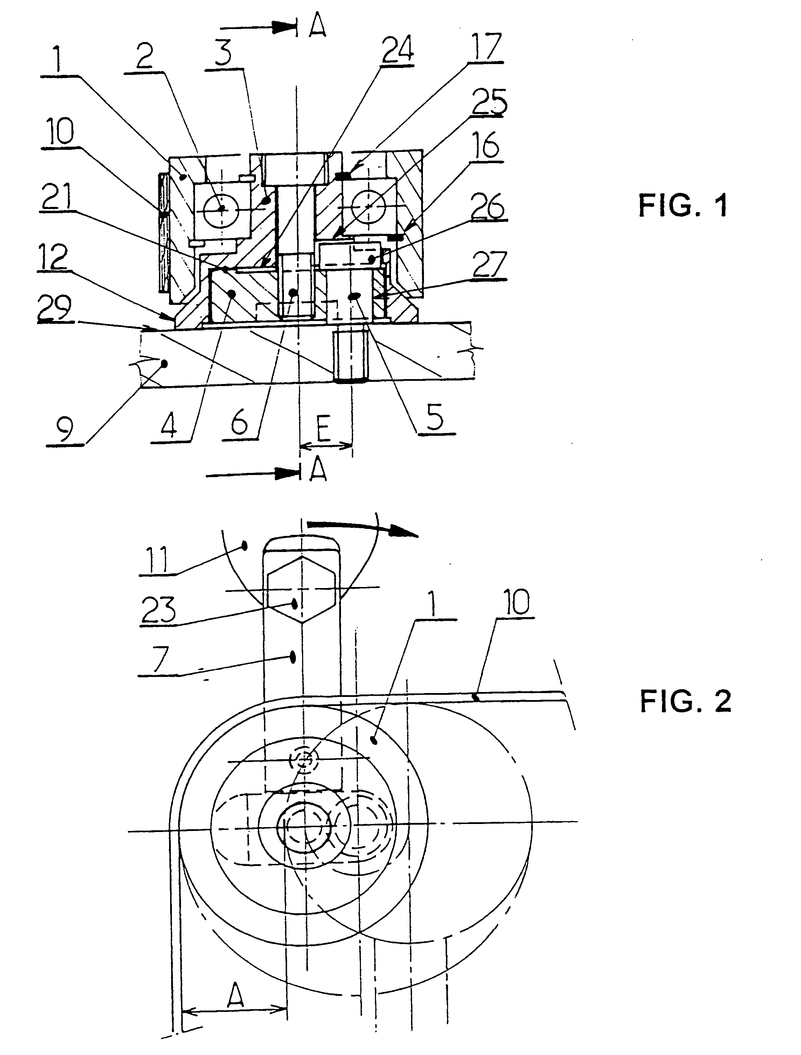

En référence aux dessins fig. 1, fig. 2 et fig. 3, le dispositif comporte un galet extérieur cylindrique (1), de forme adaptée à chaque type de transmission et constituant, sur les dessins, une poulie pour courroie (10) recevant un ou plusieurs roulements à billes (2), lesquels sont solidaires d'un arbre central constitué d'un moyeu (3) traversé par une vis de serrage (6) qui agit sur une bride ou pièce intermédiaire (4) placée librement dans un logement (24) du moyeu (3). Cette pièce intermédiaire (4) permet de créer un décalage latéral (E) entre l'axe de la vis de serrage (6) et un axe fixe de pivotement (5) solidaire de la surface d'appui (9). Cet axe fixe de pivotement (5) est constitue d'une partie cylindrique (27) constituant le guidage en rotation du moyeu (3), de hauteur définie entre deux faces dont l'une repose sur la surface d'appui (9) et dont l'autre est formée par le dessous d'une tête cylindrique (26) qui s'étend radialement au-delà de la partie (27) et qui s'engage librement dans un logement (25) adapté dans le moyeu (3). L'entr'axe obtenu par le décalage latéral (E) précité permet, par la rotation du moyeu (3) autour de l'axe (5), lorsque la vis (6) n'est pas encore serrée, de faire parcourir au moyeu (3) une course (A) circulaire qui constitue la course de tension du dispositif, le serrage de la vis (6) dans la pièce intermédiaire (4) qui agit en moyen de bridage et prend appui ; à l'une de ses extrémités comportant un talon(21) dans le fond du logement (24), et à l'autre extrémité sous la tête (26) de l'axe fixe de pivotement (5), ce qui immobilise, par pression et adhérence, dans la position déterminée, le moyeu (3) sur la surface d'appui (29).

La stabilité de l'ensemble est assurée par l'embase (12) de grand diamètre, du moyeu (3). L'axe fixe de pivotement (5) est constitué d'un axe épaulé, fileté, dont la partie centrale cylindrique permet le libre pivotement et coulissement longitudinal de la pièce intermédiaire (4) entre, d'une part, la tête de l'axe constituant la face d'appui de la pièce intermédiaire (4) et d'autre part, la face d'appui de l'axe sur le support de transmission (9). Cette face d'appui est constituée par le fait que la partie filetée est de diamètre inférieur à la partie cylindrique.

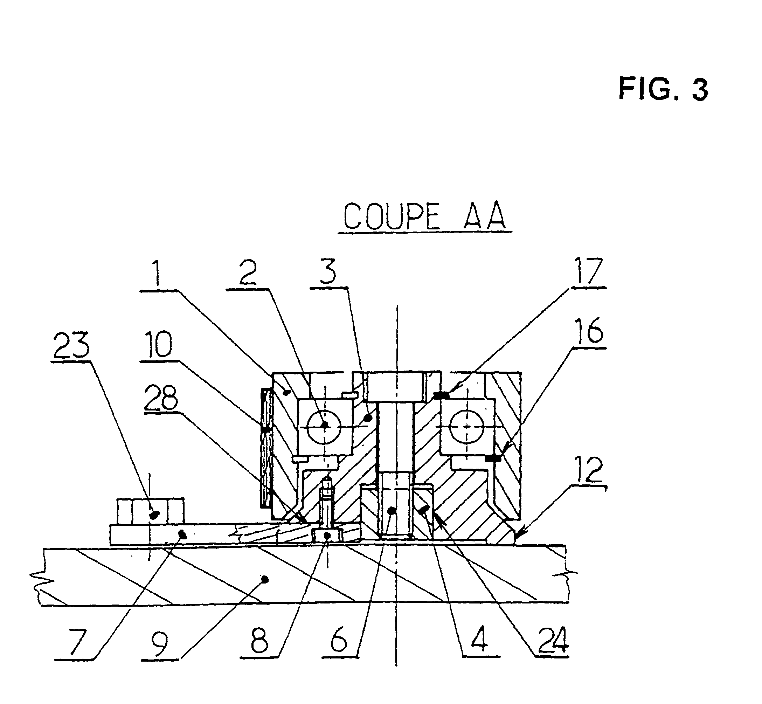

Dans la forme de réalisation suivant les fig. 2 et 3, le moyeu (3) comporte dans son embase (12) un logement (28) recevant un bras d'entraînement inférieur (7), solidaire du moyeu (3), par la vis (8) permettant, à l'aide d'une clé à fourche (11) standard du commerce ou d'une clé dynamométrique non représentée sur le dessin, de faire pivoter le dispositif autour de l'axe fixe de pivotement (5) et ainsi de tendre la transmission (10).

L'utilisation d'une clé dynamométrique permet d'appliquer et de mesurer simultanément l'effort exercé et d'obtenir ainsi une tension déterminée et reproductible de la transmission (10).

Dans la forme de réalisation suivant la fig. 3 si la vis (8) n'est pas montée, le bras d'entraînement (7) est amovible et coulisse dans le logement du moyeu (3) pour être retiré, après tension de la transmission, lorsque l'encombrement du dispositif doit être réduit.

Dans la forme de réalisation suivant les fig. 2 et 3, le bras d'entraînement (7) pourra comporter, à son extrémité, une partie en saillie de forme polygonale (23) permettant l'utilisation d'outils de serrage standard du commerce : clé à fourche (11), à pipe, polygonale, à molette ou à douilles. Ces clés pourront équiper une clé dynamométrique non représentée sur les dessins, permettant d'appliquer et de mesurer simultanément l'effort exercé et d'obtenir ainsi une tension déterminée et reproductible de la transmission (10).

L'installation du dispositif s'effectue en deux phases : mise en place de la pièce intermédiaire (4) et de l'axe fixe de pivotement (5) sur le support de transmission (9), puis l'ensemble constitué du moyeu (3) équipé du roulement (2) maintenu par les anneaux d'arrêt (16) et (17), et du galet (1), sera assemblé avec la pièce intermédiaire (4) par la vis de serrage (6).

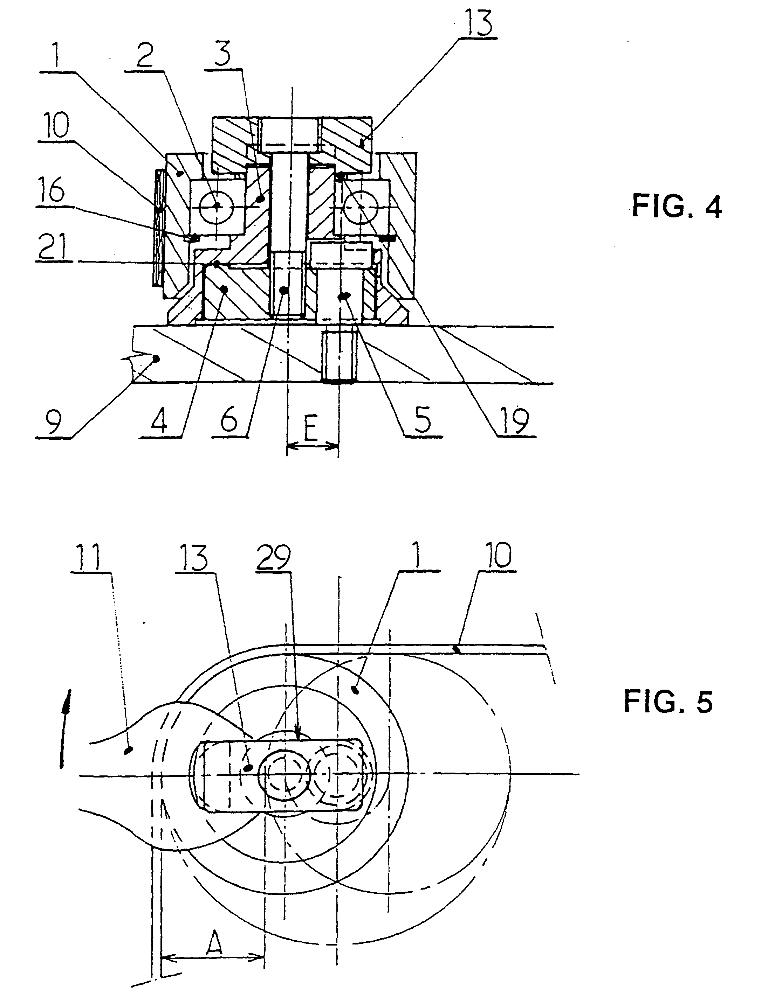

En référence aux dessins fig. 4 et fig. 5, le moyeu (3) comporte, dans sa partie supérieure, un logement recevant un bras d'entraînement (13), en appui sur l'entretoise (19), solidaire du moyeu (3), par la vis (6), permettant, à l'aide d'une clé à fourche (11) standard du commerce ou d'une clé dynamométrique, non représentée sur le dessin, de faire pivoter le dispositif autour de l'axe de pivotement (5) et ainsi de tendre la transmission (10). L'utilisation d'une clé dynamométrique permet d'appliquer et de mesurer l'effort exercé et d'obtenir ainsi une tension déterminée et reproductible de la transmission.

L'installation du dispositif, la fixation par l'axe fixe de pivotement (5), la tension de la transmission par le bras d'entraînement (7) ou le bras d'entraînement (13) ainsi que le blocage en position du dispositif par la vis de serrage (6) sont réalisables par le dessus du support de transmission (9).

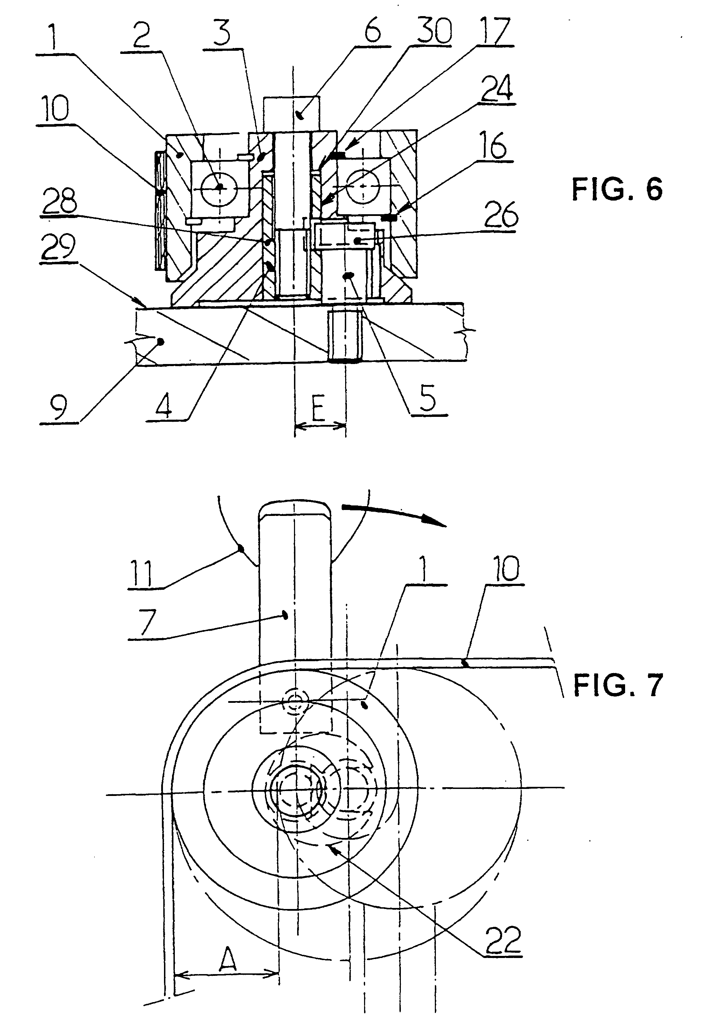

Dans la forme de réalisation selon les fig.6 et 7, la pièce intermédiaire (4) est constituée, d'une part, d'un guide (28) coulissant dans un orifice (24) du moyeu (3) parallèle à l'axe de rotation du galet (1) et d'autre part, d'une collerette (22) perpendiculaire et en prolongement du guide (28) prenant appui sous la tête (26) de l'axe fixe de pivotement (5), ce qui immobilise, par pression et adhérence, dans la position déterminée, le moyeu (3) sur la surface d'appui (29). La collerette (22) de la pièce intermédiaire (4) peut comporter une rainure ouverte, permettant son montage sous la tête de l'axe de pivotement (5), le guidage en rotation du moyeu (3) est assuré par le centrage de la tête (26) de l'axe fixe de pivotement dans un logement prévu dans le moyeu (3).

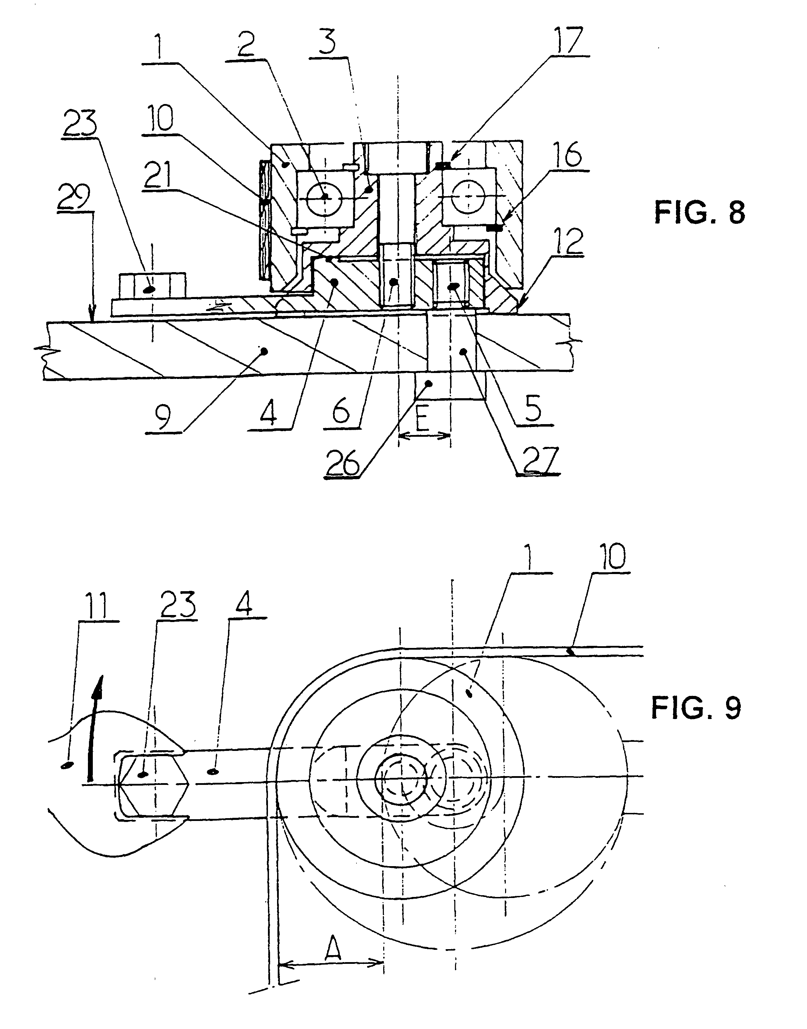

Dans la forme de réalisation selon la fig. 8, si la fixation du dispositif est souhaitable par le dessous du support de transmission (9), la pièce intermédiaire (4) peut comporter un taraudage recevant l'axe fixe de pivotement (5) accessible par le dessous du support de transmission (9) qui comporte un orifice recevant la partie cylindrique (27) de l'axe fixe de pivotement (5), la tête (26) dudit axe prenant appui sous le support de la transmission, le serrage de la vis de serrage (6) assure l'immobilisation, par pression et adhérence, du moyeu (3) sur la surface d'appui (29).

Dans une forme de réalisation non représentée, si la fixation du dispositif est souhaitable par le dessous du support de transmission (9), la pièce intermédiaire (4), dans sa collerette (22), peut comporter un taraudage recevant un axe fixe de pivotement (5) accessible par le dessous, pivotant et coulissant dans le support de transmission (9), et permettant le libre pivotement de la pièce intermédiaire (4).

Dans la forme de réalisation selon les fig.8 et 9, la pièce intermédiaire (4) est prolongée au-delà de l'extérieur de l'embase (12) du moyeu (3) et constitue le bras d'entraînement.

Dans la forme de réalisation suivant les fig. 8 et 9, la pièce intermédiaire (4) lorsqu'elle est prolongée, constitue le bras d'entraînement et pourra comporter à son extrémité, une partie en saillie polygonale (23) permettant l'utilisation d'outils de serrage standard du commerce : clé à fourche (11), à pipe, polygonale, à molette ou à douilles. Ces clés pourront équiper une clé dynamométrique non représentée sur les dessins, permettant d'appliquer et de mesurer simultanément l'effort exercé et d'obtenir ainsi une tension déterminée et reproductible de la transmission (10).

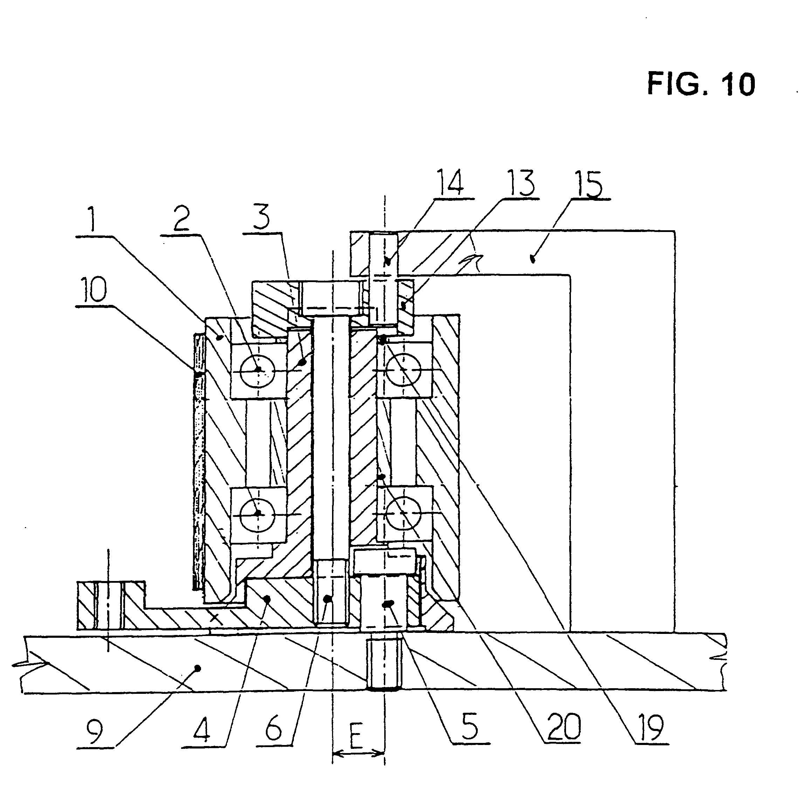

Dans la forme de réalisation suivant la fig. 10, les efforts de tension des courroies de très grande largeur peuvent rendre la fixation en porte à faux du dispositif, insuffisante. Dans ce cas, le bras d'entraînement supérieur (13) peut comporter un alésage recevant un axe (14), concentrique à l'axe fixe de pivotement (5) permettant, par un support (15) solidaire du support de transmission (9), d'assurer le maintien de l'extrémité du moyeu (3). Le galet extérieur (1) peut comporter plusieurs roulements à billes (2). Le bras d'entraînement supérieur (13) est encastré dans une rainure du moyeu (3) et perpendiculairement centré sur le moyeu (3) par un embrèvement dans sa face d'appui sur l'entretoise (19). Les roulements à billes (2) sont entretoisés par la cale (20).

Dans des formes de réalisations non représentées, le bras d'entraînement (7) peut constituer une partie du moyeu (3), ceci notamment dans le cas où le moyeu (3) est réalisé en une seule opération de moulage.

Le dispositif, selon l'invention, est particulièrement destiné à la tension des transmissions des mouvements de rotation, dans les domaines s'étendant, par exemples non limitatifs, des matériels de bureautique aux machines industrielles.

## Revendications

1. Dispositif de tension et d'immobilisation d'un galet tendeur de transmission de mouvements de rotation par courroie, chaîne, câble ou analogue permettant le réglage et la fixation du moyeu d'un galet tendeur formant excentrique, dans une position déterminée, sur une surface d'appui appartenant au support de la transmission, au moyen d'une vis de serrage traversant le moyeu,
où la vis de serrage (6) traversant le moyeu (3), agit sur une pièce intermédiaire (4) placée librement dans un logement (24) du moyeu (3), cette pièce intermédiaire (4) permettant de créer un décalage latéral (E) entre l'axe de la vis de serrage (6) et un axe fixe de pivotement (5) solidaire du support de la transmission (9), cet axe fixe de pivotement (5) étant constitué d'une partie cylindrique (27) constituant le guidage en rotation du moyeu (3), de hauteur définie, entre deux faces dont l'une repose sur la surface d'appui (29) et dont l'autre est formée par le dessous d'une tête cylindrique (26) qui s'étend radialement au-delà de la partie cylindrique, (27) et qui s'engage librement dans un logement (25) prévu dans le moyeu (3), l'entr'axe obtenu par le décalage latéral (E) précité permettant, par la rotation du moyeu (3) autour de l'axe fixe de pivotement (5) lorsque la vis de serrage (6) n'est pas encore serrée, de faire parcourir au moyeu (3) une course (A) circulaire qui constitue la course de tension du dispositif, le serrage de la vis de serrage (6) dans la pièce intermédiaire (4) qui agit en moyen de bridage et prend appui à l'une de ses extrémités, comportant un talon (21) dans le fond du logement (24), et à l'autre extrémité sous la tête (26) de l'axe fixe de pivotement (5) ce qui immobilise, par pression et adhérence, dans la position déterminée, le moyeu (3) sur la surface d'appui (29).

2. Dispositif selon la revendication 1,
**caractérisé en ce que** le moyeu (3) comporte, dans son embase (12), un logement (28) recevant un bras d'entraînement inférieur (7) solidaire du moyeu (3) s'étendant au-delà de l'extérieur de l'embase (12) du moyeu (3) permettant, à l'aide d'une clé à fourche (11) standard du commerce ou d'une clé dynamométrique, de faire pivoter le dispositif autour de l'axe de pivotement (5) et ainsi, de tendre la transmission (10).

3. Dispositif selon l'une quelconque des revendications 1 à 2,
**caractérisé en ce que** le moyeu comporte, dans sa partie supérieure, un logement (29) recevant un bras d'entraînement supérieur (13), solidaire du moyeu (3), permettant, à l'aide d'une clé à fourche (11) standard du commerce ou d'une clé dynamométrique, de faire pivoter le dispositif autour de l'axe fixe de pivotement (5) et ainsi, de tendre la transmission (10).

4. Dispositif selon les revendications 2 et 3,
**caractérisé en ce que** le bras d'entraînement inférieur (7) et le bras d'entraînement supérieur (13) comportent des extrémités adaptées pouvant recevoir des dispositifs complémentaires de réglage et d'immobilisation en position du moyeu (3) du galet tendeur, dispositifs de traction ou de poussée par éléments souples ou élastiques, dispositifs de traction ou de poussée par des actionneurs commandés à distance et des dispositifs de contrôle et de sécurité détectant les défauts de l'effort de tension ou de la position angulaire du galet tendeur.

5. Dispositif selon l'une quelconque des revendications précédentes,
**caractérisé en ce que** la pièce intermédiaire (4) est constituée d'une part d'un guide (28) coulissant dans un logement du moyeu (3) parallèle à l'axe de rotation du galet (1) et d'autre part, d'une collerette (22) perpendiculaire et en prolongement du guide (28) prenant appui sous la tête (26) de l'axe fixe de pivotement (5), ce qui immobilise, par pression et adhérence, dans la position déterminée, le moyeu (3) sur la surface d'appui (29).

6. Dispositif selon l'une quelconque des revendications précédentes,
**caractérisé en ce que** la pièce intermédiaire (4) est prolongée au-delà de l'extérieur de l'embase (12) du moyeu (3) et constitue le bras d'entraînement permettant d'exercer l'effort de tension.

7. Dispositif selon l'une quelconque des revendications précédentes et la revendication 2,
**caractérisé en ce que** le bras d'entraînement inférieur (7), lorsqu'il est constitué d'une pièce spécifique, est amovible et peut être retiré de l'embase du moyeu (3) par coulissement dans son logement après réglage de la tension de la transmission.

8. Dispositif selon l'une quelconque des revendications précédentes et les revendications 2 et 3,
**caractérisé en ce que** les bras d'entraînement inférieur (7) et supérieur (13), en leur extrémité, comportent une partie en saillie de forme polygonale (23), permettant l'utilisation d'outils de serrage standard du commerce : clé à fourche, à pipe, polygonale, à molette, à douilles, clé dynamométrique.

9. Dispositif selon l'une quelconque des revendications précédentes,
**caractérisé en ce que** la pièce intermédiaire (4), lorsqu'elle est prolongée au-delà de l'extérieur de l'embase (12) du moyeu (3) et constitue le bras d'entraînement, comporte en son extrémité une partie en saillie de forme polygonale (23), permettant l'utilisation d'outils de serrage standard du commerce: clé à fourche, à pipe, polygonale, à molette, à douilles, clé dynamométrique.

10. Dispositif de tension et d'immobilisation d'un galet tendeur de transmission de mouvements de rotation par courroie, chaîne, câble ou analogue permettant le réglage et la fixation du moyeu d'un galet tendeur formant excentrique, dans une position déterminée, sur une surface d'appui appartenant au support de la transmission, au moyen d'une vis de serrage traversant le moyeu,
où la vis de serrage (6) traversant le moyeu (3), agit sur une pièce intermédiaire (4) placée librement dans un logement (24) du moyeu (3), cette pièce intermédiaire (4) permettant de créer un décalage latéral (E) entre l'axe de la vis de serrage (6) et un axe fixe de pivotement (5) solidaire du support de la transmission (9), cet axe fixe de pivotement (5) comprenant une partie cylindrique (27) passant par un orifice prévu dans la surface d'appui (29) du support de la transmission (9) pour constituer un guidage en rotation du moyeu (3), un filetage s'engageant dans un taraudage de la pièce intermédiaire (4) et une tête (26) prenant appui sous le support de la transmission (9) de sorte que cet axe fixe de pivotement est accessible par le dessous du support de transmission (9), l'entr'axe obtenu par le décalage latéral (E) précité permettant, par la rotation du moyeu (3) autour de l'axe fixe de pivotement (5) lorsque la vis de serrage (6) n'est pas encore serrée, de faire parcourir au moyeu (3) une course (A) circulaire qui constitue la course de tension du dispositif, le serrage de la vis de serrage (6) dans la pièce intermédiaire (4) qui agit en moyen de bridage et prend appui à l'une de ses extrémités, comportant un talon (21) dans le fond du logement (24), et à l'autre extrémité sous la tête (26) de l'axe fixe de pivotement (5) ce qui immobilise, par pression et adhérence, dans la position déterminée, le moyeu (3) sur la surface d'appui (29).

11. Dispositif selon l'une quelconque des revendications précédentes et la revendication 3,
**caractérisé en ce que** le bras d'entraînement supérieur (13) comporte un alésage recevant un axe (14) concentrique à l'axe fixe de pivotement (5) permettant, par un support (15) solidaire du support de transmission (9), d'assurer le maintien de l'extrémité du moyeu (3).

## Claims

1. Device for tensioning and immobilization off a roller for tensioning a transmission of rotational moments by belt, chain, cable, or the like, enabling adjustment and fixing of the hub of an eccentric-forming tension roller in a determined position, on a bearing surface belonging, for example, to the transmission support, by means of a clamping screw passing through the hub,
where the clamping screw (6) passing through the hub (3), acts on an intermediate part (4) freely placed in a housing (24) of the hub (3), this intermediate part (4) enabling creation of a lateral offset (E) between the axis of the clamping screw (6) and a fixed pivot pin (5) integral with the transmission support (9), this fixed pivot pin (5) consisting of a cylindrical portion (27) constituting the rotational guide of the hub (3) with a defined height, between two faces, one of which rests on the bearing surface (29) and the other is formed by the underface of a cylindrical head (26) which extends radially beyond the cylindrical portion (27) and which protrudes freely in a housing (25) provided in the hub (3), the distance between centers obtained by the aforementioned lateral offset (E) enabling, by rotation of the hub (3) around the fixed pivot pin (5) when the clamping screw (6) has not yet been tightened, making the hub (3) travel a circular path (A) which constitutes the tensioning stroke of the device, the tightening of the clamping screw (6) in the intermediate part (4) which acts as a clamping means and is supported one of its ends having a proj ection (21) in the bottom of the housing (24) and on its other end under the head (26) of the fixed pivot pin (5), which immobilizes the hub (3) against the bearing surface (29) by pressure and adhesion in the position determined.

2. Device according to claim 1,
**characterised in that** the hub (3) has, in its seat (12), a housing (28) accommodating a lower driving arm (7) integral with the hub (3) extending beyond the exterior of the seat (12) of the hub (3), enabling, with an off-the-shelf open-end wrench (11) or a torque wrench, pivoting the device around the pivot pin (5) and, thus, tensioning the transmission (10).

3. Device according to one of claims 1 or 2,
**characterised in that** the hub has, in its upper portion, a housing (29) accommodating an upper driving arm (13), integral with the hub (3), enabling, with an off-the-shelf open-end wrench (11) or torque wrench, pivoting the device around the fixed pivot pin (5) and, thus, tensioning the transmission (10).

4. Device according to claims 2 and 3,
**characterised in that** the lower driving arm (7) and the upper driving arm (13) have ends suitable to accommodate additional devices for adjustment and position immobilization of the hub (3) of the tension roller, devices for pulling or pushing by flexible or elastic elements, devices for pulling or pushing by remote control acting elements and control and safety devices detecting defects in the tensile load or the angular position of the tension roller.

5. Device according to one of the preceding claims,
**characterised in that** the intermediate part (4) consists, on the one hand, of a guide (28) sliding in a housing of the hub (3) parallel to the axis of rotation of the roller (1) and, on the other, a flange (22) perpendicular to and extending the guide (28) being supported under the head (26) of the fixed pivot pin (5), which immobilizes the hub (3) on the bearing surface (29) by pressure and adhesion in the position determined.

6. Device according to one of the preceding claims,
**characterised in that** the intermediate part (4) is extended beyond the exterior of the seat (12) of the hub (3) and constitutes the driving arm enabling exertion of the tensile load.

7. Device according to one of the preceding claims and claim 2,
**characterised in that** the lower driving arm (7) when it is constituted of a specific part, is removable and can be removed from the base of the hub (3) by sliding in its housing after adjustment of the tension of the transmission.

8. Device according to one of the preceding claims and claim 2 and 3,
**characterised in that** the lower (7) and the upper (13) driving arms have, at their end, a polygon-shaped protruding portion (23), enabling the use of off-the-shelf clamping tools: open-end wrench, box wrench, ring wrench, adjustable wrench, socket wrench, torque wrench.

9. Device according to one of the preceding claims,
**characterised in that** the intermediate part (4) when it is extended beyond the exterior of the seat (12) of the hub (3) and constitutes the driving arm, has at its end a polygon-shaped protruding portion (23), enabling the use of off-the-shelf clamping tools: open-end wrench, box wrench, ring wrench, adjustable wrench, socket wrench, torque wrench.

10. Device for tensioning and immobilization off a roller for tensioning a transmission of rotational moments by belt, chain, cable, or the like, enabling adjustment and fixing of the hub of an eccentric-forming tension roller in a determined position, on a bearing surface belonging, for example, to the transmission support, by means of a clamping screw passing through the hub,
where the clamping screw (6) passing through the hub (3), acts on an intermediate part (4) freely placed in a housing (24) of the hub (3), this intermediate part (4) enabling creation of a lateral offset (E) between the axis of the clamping screw (6) and a fixed pivot pin (5) integral with the transmission support (9), this fixed pivot pin (5) comprising a cylindrical portion (27) going trough by an opening provided on the bearing surface (29) of the transmission support (9) to constitute a guiding in rotating of the hub (3), a screw cutting fitting through a tapping of the intermediate piece (4) and a head (26) supporting under the transmission support (9) in the way that the a fixed pivot pin is accessible by the underside of the transmission support (9), the distance between centers obtained by the aforementioned lateral offset (E) enabling, by rotation of the hub (3) around the fixed pivot pin (5) when the clamping screw (6) has not yet been tightened, making the hub (3) travel a circular path (A) which constitutes the tensioning stroke of the device, the tightening of the clamping screw (6) in the intermediate part (4) which acts as a clamping means and is supported one of its ends having a projection (21) in the bottom of the housing (24) and on its other end under the head (26) of the fixed pivot pin (5), which immobilizes the hub (3) against the bearing surface (29) by pressure and adhesion in the position determined.

11. Device according to one of the preceding claims and the claim 3,
**characterised in that** the upper driving arm (13) has a bore accommodating a pin (14) concentric with the fixed pivot pin (5), enabling holding the end of the hub (3) by a support (15) integral with the transmission support (9).

## Patentansprüche

1. Spann- und Blockiervorrichtung einer Spannrolle für die Übertragung von Rotationsbewegungen mittels Treibriemen, Kette, Kabel oder analog, wodurch es ermöglicht ist, die Regelung und Befestigung der Nabe einer exzentrischen Spannrolle in einer bestimmten Position auf einer zum Träger des Kraftübertragungsorgans gehörigen Stützfläche, mittels einer die Nabe durchdringende Spannschraube durchzuführen, wobei die die Nabe (3) durchdringende Spannschraube (6) auf ein frei in einer Aufnahme (24) der Nabe (3) untergebrachten Zwischenstück (4) einwirkt, wobei es dieses Zwischenstück (4) ermöglicht, eine seitliche Aufnahme (E) zwischen der Achse der Spannschraube (6) und einer drehfesten Achse (5), die einteilig mit dem Träger des Kraftübertragungsorgans (9) ausgebildet ist, zu schaffen, wobei diese drehfeste Achse (5) aus einem zylindrischen Teil (27) gebildet ist und die Führung der Nabe (3) unter Rotation bildet, mit einer bestimmten Höhe, zwischen zwei Seiten, wobei eine auf der Stützfläche (29) liegt und die andere durch das untere Teil eines zylindrischen Kopfes (26) gebildet ist, der sich radial über das zylindrische Teil (27) erstreckt, und der frei in einer in der Nabe (3) vorgesehenen Aufnahme (25) eingreift, wobei der aus der obengenannten seitlichen Aufnahme (E) erhaltene Achsabstand es mittels Rotation der Nabe (3) um die drehfeste Achse (5) gestattet, wenn die Spannschraube (6) noch nicht befestigt ist, die Nabe (3) einen Weg (A) im Kreis umlaufen zu lassen, der den Spannweg der Vorrichtung darstellt, wobei die Spannschraube (6) im Zwischenstück (4), das als Anflanschmittel wirkt und sich an einem seiner Enden abstützt, eine Wulst (21) am Boden der Aufnahme (24) und am anderen Ende unter dem Kopf (26) der drehfesten Achse (5) umfasst, was die Nabe (3) durch Anpressdruck in der bestimmten Position auf der Stützfläche (29) festsetzt.

2. Vorrichtung nach Anspruch 1, **dadurch gekennzeichnet, dass** die Nabe (3) an ihrem Ansatzstück (12) mit einer Lagerung (28) versehen ist zur Aufnahme eines unteren Antriebsarmes (7), der mit der Nabe (3) einteilig ausgebildet ist, sich über die Außenseite des Ansatzstücks (12) der Nabe (3) erstreckt, wodurch es mit Hilfe eines handelsüblichen Standard-Gabelschlüssels (11) oder eines Drehmomentschlüssels ermöglicht ist, die Vorrichtung um die Drehachse (5) drehen zu lassen sowie den Achsantrieb (10) zu spannen.

3. Vorrichtung gemäß einem der Patentansprüche 1 bis 2, **dadurch gekennzeichnet, dass** die Nabe in ihrem Oberteil eine Aufnahme (29) umfasst, die mit einem oberen Antriebsarm (13) versehen ist und mit der Nabe (3) einen einzigen Teil bildet, wodurch es ermöglicht ist, mit Hilfe eines handelsüblichen Standard-Gabelschlüssels (11) oder eines Drehmomentschlüssels die Vorrichtung um die drehfeste Achse (5) zu drehen sowie den Achsantrieb (10) zu spannen.

4. Vorrichtung gemäß den Patentansprüchen 2 und 3, **dadurch gekennzeichnet, dass** der untere Antriebsarm (7) und der obere Antriebsarm (13) angepasste Enden enthalten, welche komplementäre Regelungs- und Blockiervorrichtungen in der Position der Nabe (3) der Spannrolle aufnehmen können, Zug- oder Schubvorrichtungen mittels schmiegsamen oder elastischen Elementen, Zug- oder Schubvorrichtungen durch ferngesteuerte Betätigungsmittel und Steuer- und Sicherheitsvorrichtungen, die den Fehler der Spannkräfte oder der Winkelposition der Spannrolle feststellen.

5. Vorrichtung gemäß einer der vorangehenden Patentansprüche, **dadurch gekennzeichnet, dass** das Zwischenstück (4) einerseits aus einem Führungsteil (28) besteht, das in einer Nabenaufnahme (3) parallel zur Drehachse des Spanners (1) gleitet, und andererseits aus einem senkrechten Schutzkragen (22) besteht und das in Verlängerung des Führungsteils (28) unter dem Kopf (26) der drehfesten Achse (5) festsitzt, was die Nabe (3) durch Druck und Anliegen in der bestimmten Position auf der Stützfläche (29) festsetzt.

6. Vorrichtung gemäß einer der vorangehenden Patentansprüche, **dadurch gekennzeichnet, dass** sich das Zwischenstück (4) über die Außenseite des Ansatzstücks (12) der Nabe (3) hin verlängert und den Antriebsarm bildet, wodurch es möglich ist, die Spannkraft auszuüben.

7. Vorrichtung nach einer der vorangehenden Ansprüche, **dadurch gekennzeichnet, dass** der untere Antriebsarm (7), wenn dieser aus einem spezifischen Teil gebildet ist, abnehmbar ist und vom Ansatzstück der Nabe (3) entfernt werden kann durch Gleiten in deren Aufnahme nach der Spannungsregelung des Achsantriebs.

8. Vorrichtung gemäß einem der vorangehenden Patentansprüche, **dadurch gekennzeichnet, dass** der untere Antriebsarm (7) und der obere Antriebsarm (13) an deren Ende einen vieleckigen Vorsprung (23) enthalten, wodurch es ermöglicht ist, handelsübliche Standard-Spannwerkzeuge zu benutzen, wie z. B. Gabelschlüssel, Lochschlüssel, Ringschlüssel, Gabelrollschlüssel, Steckschlüssel, Drehmomentschlüssel.

9. Vorrichtung gemäß einer der vorangehenden Patentansprüche, **dadurch gekennzeichnet, dass** das Zwischenstück (4), wenn dieses sich über die Außenseite des Ansatzstücks (12) der Nabe (3) hin verlängert und den Antriebsarm bildet, mit seinem Ende einen vieleckigen Vorsprung (23) bildet, wodurch es ermöglicht ist, handelsübliche Standard-Spannwerkzeuge, wie z. B. Gabelschlüssel, Lochschlüssel, Ringschlüssel, Gabelrollschlüssel, Steckschlüssel, Drehmomentschlüssel zu benutzen.

10. Spann- und Blockiervorrichtung einer Spannrolle für die Übertragung von Drehbewegungen mittels Treibriemen, Kette, Kabel oder analog, wodurch die Regelung und die Befestigung der Nabe einer exzentrischen Spannrolle in einer bestimmten Position auf einer zum Träger des Kraftübertragungsorgans gehörigen Stützfläche ermöglicht ist, mittels einer die Nabe durchdringenden Spannschraube, wobei die die Nabe (3) durchdringende Spannschraube (6) auf ein frei in einer Aufnahme (24) der Nabe (3) untergebrachten Zwischenstück (4) einwirkt, womit es dieses Zwischenstück (4) gestattet, eine seitliche Aufnahme (E) zwischen der Achse der Spannschraube (6) und einer drehfesten Achse (5), die mit dem Träger des Kraftübertragungsorgans (9) einteilig gestaltet ist, zu schaffen, wobei diese drehfeste Achse (5) mit einem zylindrischen Teil (27) ausgestattet ist, das durch eine in der Stützfläche (29) vorgesehenen Öffnung des Trägers des Kraftübertragungsorgans (9) hindurchführt, um eine Führung der Nabe in Rotation (3) darzustellen, wobei ein in ein Gewindewerkzeug des Zwischenstücks (4) eingreifendes Gewinde und ein unter dem Träger des Kraftübertragungsorgans (9) sitzender Kopf (26) sich so abstützt, dass diese drehfeste Achse unter dem Träger des Kraftübertragungsorgans (9) zugänglich ist, wobei der durch die obengenannte seitliche Aufnahme (E) erhaltene Achsabstand es mittels Rotation der Nabe (3) um die drehfeste Achse (5) ermöglicht, wenn die Spannschraube (6) noch nicht befestigt ist, die Nabe (3) einen Weg (A) im Kreis durchlaufen zu lassen, welcher den Spannungsweg der Vorrichtung darstellt, wobei die Befestigung der Spannschraube (6) im Zwischenstück (4), das als Anflanschmittel wirkt und sich an einem seiner Enden abstützt, am Boden der Aufnahme (24) und am anderen Ende unter dem Kopf (26) der drehfesten Achse (5) mit einer Wulst (21) versehen ist, was die Nabe (3) durch Druck und Anliegen in der bestimmten Position auf der Stützfläche (29) festsetzt.

11. Vorrichtung gemäß einer der vorangehenden Ansprüche und des Anspruchs 3, **dadurch gekennzeichnet, dass** der obere Antriebsarm (13) mit einer die Achse (14) aufnehmende Ausbohrung, die konzentrisch zur drehfesten Achse (5) liegt, versehen ist, wodurch es ermöglicht ist, über eine Stütze (15), die mit dem Träger des Kraftübertragungsorgans (9) einteilig gestaltet ist, das Zusammenhalten des Endes der Nabe (3) zu sichern.
